# EUROPEAN PATENT APPLICATION

(11) **EP 4 590 032 A1**
(43) Date of publication of application: **23.07.2025**
(21) Application number: 22958789.4
(22) Date of filing: 14.09.2022
(51) Int. Cl.: H04W 52/02, H04W 88/02

(54) **TERMINAL AND COMMUNICATION METHOD**

(71) Applicant: NTT DOCOMO, INC., Tokyo 100-6150 (JP)
(72) Inventor: KURITA, Daisuke, Tokyo 100-6150 (JP); HARADA, Hiroki, Tokyo 100-6150 (JP); KUMAGAI, Shinya, Tokyo 100-6150 (JP); NAKAMURA, Takuma, Tokyo 100-6150 (JP); NAGATA, Satoshi, Tokyo 100-6150 (JP)
(74) Representative: Hoffmann Eitle
(86) International application number: PCT/JP2022/034478
(87) International publication number: WO 2024/057463

(57) **Abstract**

A terminal includes: a first reception unit configured to receive a first signal from a base station; a second reception unit configured to receive a second signal from the base station by using a power consumption smaller than that of the first reception unit; and a control unit configured to activate or deactivate each of the first reception unit and the second reception unit. In a case where the first reception unit is activated and the second reception unit is deactivated, the control unit deactivates the first reception unit after activating the second reception unit.

## Description

### FIELD OF THE INVENTION

The present invention relates to a terminal and a communication method in a wireless communication system.

### BACKGROUND OF THE INVENTION

Technical specifications of the Long Term Evolution (LTE) have been developed for the Universal Mobile Telecommunication System (UMTS) network in order to achieve further high-speed data rate, low latency, or the like. In addition, an LTE successor system is being discussed in order to achieve wider band and faster speed than LTE. The LTE successor system includes a system that is referred to as, for example, LTE-Advance (LTE-A), Future Radio Access (FRA), 5th generation mobile communication system (5G), 5G plus (5G+), New Radio Access Technology (New-RAT), New Radio (NR), or the like.

In NR, various wireless technologies and network architectures are being discussed in order to satisfy the requirements such as radio link delay of 1 ms or less while achieving throughput of 10 Gbps or more (for example, refer to Non-Patent Document 1).

In addition, in future systems, reduction of power consumption by performing transmission and reception by using a simple transceiver, circuit, radio system (Wake-up receiver/circuit, hereinafter, referred to as "wake-up receiver" or "WUR") and signals is being discussed separately from the transceiver, circuit, radio system used for performing the actual data transmission and reception between, for example, a terminal and a base station and signals.

### CITATION LIST

### Non-Patent Document

Non-Patent Document 1: 3GPP TS 38.300 V17.1.0 (2022-06)

### SUMMARY OF THE INVENTION

### TECHNICAL PROBLEM

Reduction of power consumption can be achieved by deactivating the main receiver when presence or absence of data is monitored by activating the wake-up receiver. However, the detailed operation procedure of a terminal in which a wake-up receiver is installed has not been specified.

The present invention has been made in view of the above points, and it is an object of the present invention to control a simple receiver and a main receiver installed in a terminal in a wireless communication system.

### SOLUTION TO PROBLEM

According to the disclosed technique, a terminal is provided. The terminal includes: a first reception unit configured to receive a first signal from a base station; a second reception unit configured to receive a second signal from the base station by using a power consumption smaller than that of the first reception unit; and a control unit configured to activate or deactivate each of the first reception unit and the second reception unit. In a case where the first reception unit is activated and the second reception unit is deactivated, the control unit deactivates the first reception unit after activating the second reception unit.

### ADVANTAGEOUS EFFECTS OF INVENTION

According to the disclosed technique, a simple receiver and a main receiver installed in a terminal in a wireless communication system can be controlled.

### BRIEF DESCRIPTION OF THE DRAWINGS

[Fig. 1] is a drawing illustrating a configuration example of a wireless communication system in an embodiment of the present invention.
[Fig. 2] is a flowchart for describing an example (1) of a control related to the wake-up receiver in an embodiment of the present invention.
[Fig. 3] is a flowchart for describing an example (2) of a control related to the wake-up receiver in an embodiment of the present invention.
[Fig. 4] is a flowchart for describing an example (3) of a control related to the wake-up receiver in an embodiment of the present invention.
[Fig. 5] is a drawing illustrating an example of a functional configuration of a base station 10 in an embodiment of the present invention.
[Fig. 6] is a drawing illustrating an example of a functional configuration of a terminal 20 in an embodiment of the present invention.
[Fig. 7] is a drawing illustrating an example of a hardware structure of the base station 10 or the terminal 20 in an embodiment of the present invention.
[Fig. 8] is a drawing illustrating an example of a structure of a vehicle 2001 in an embodiment of the present invention.

### DETAILED DESCRIPTION OF THE PREFERRED EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

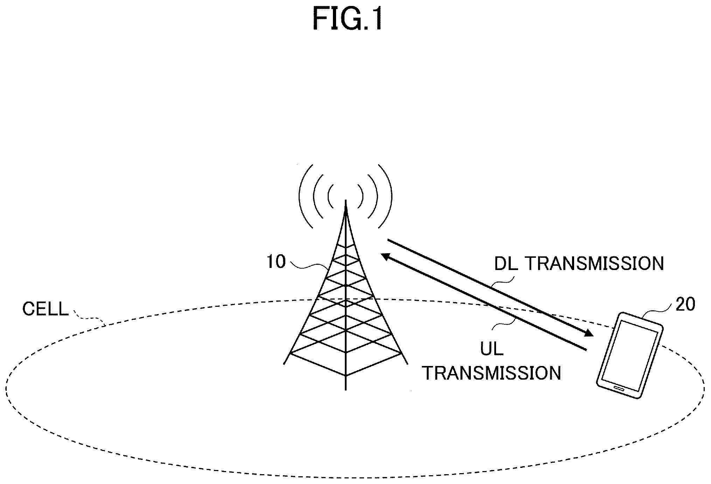

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

Here, in the conventional system, in order to perform data transmission and reception, the terminal 20 is required to perform periodic monitoring of scheduling information, or the like, that is transmitted from the base station 10, or the like, by waking up once for each DRX (Discontinuous reception) cycle. The monitoring is performed even in a case where there is no data transmission and reception, and thus, a large amount of power is consumed by the terminal 20 and the battery performance will be damaged.

In addition, in future systems, reduction of power consumption by indicating presence or absence of data to the terminal 20 by performing transmission and reception by using a simple transceiver, circuit, radio system (wake-up receiver/circuit, hereinafter, referred to as "wake-up receiver" or "WUR") and signals is being discussed separately from the transceiver, circuit, radio system (main receiver/circuit, hereinafter, referred to as "main receiver" or "main circuit") used for performing the actual data transmission and reception between, for example, a terminal 20 and a base station 10 and signals. In other words, the power required for transmission and reception by the WUR may be smaller than the power required for transmission and reception by the main circuit.

By keeping the main circuit that performs normal data transmission and reception OFF while the presence or absence of data is monitored by the WUR, the terminal 20 does not need to turn ON the main circuit during a period in which there is no signaling or data traffic, and thus, reduction of power consumption can be expected. It is to be noted that the signal for the main receiver and the signal for the wake-up receiver may be different or may be the same.

However, the detailed operation of the terminal 20 in which the WUR is installed, for example, the related operation between the WUR and the main circuit, the layer 1 procedure, or the like, has not been specified.

Therefore, states may be separately defined as illustrated in Table 1 according to the states (ON or OFF) of the circuits installed in the terminal. It is to be noted that ON may mean activated and/or being operated, and OFF may mean deactivated and/or being stopped. A receiver or circuit may be enabled to reduce the power consumption during the OFF period.

**[Table 1]**

| | Main circuit OFF | Main circuit ON (idle) | Main circuit ON (connected) |
|---|---|---|---|
| WUR OFF (deactivated) | State 1 | State 3 | State 5 |
| WUR ON (activated) | State 2 | State 4 | State 6 |

As illustrated in Table 1, State 1 may be defined as main circuit OFF and WUR OFF, State 2 may be defined as main circuit OFF and WUR ON, State 3 may be defined as main circuit ON (idle) and WUR OFF, State 4 may be defined as main circuit ON (idle) and WUR ON, State 5 may be defined as main circuit ON (connected) and WUR OFF, and State 6 may be defined as main circuit ON (connected) and WUR ON. Hereinafter, an operation, state transition, or the like, related to State 4 or State 6 will be mainly described.

An operation of State 4 or State 6 [main circuit ON/WUR ON] may be specified with respect to the terminal 20 in which the WUR is installed, and transition from other states and transition to other states may be enabled. It is to be noted that [main circuit X/WUR Y] indicates that the main circuit is in a state of X and the WUR is in a state of Y.

For example, the following Operation 1) to Operation 5) may be performed.

Operation 1) Transition from State 3 or State 5 [main circuit ON/WUR OFF] to State 2 [main circuit OFF/WUR ON] may be performed via State 4 or State 6 [main circuit ON/WUR ON].
Operation 2) Operation in State 4 or State 6 [main circuit ON/WUR ON] may be specified.
Operation 3) Condition for transitioning from State 4 or State 6 [main circuit ON/WUR ON] to State 2 [main circuit OFF/WUR ON] may be specified.
Operation 4) Condition for transitioning from State 2 [main circuit OFF/WUR ON] to State 4 or State 6 [main circuit ON/WUR ON] may be specified.
Operation 5) The terminal 20 may report the UE capability related to State 4 or State 6 [main circuit ON/WUR ON] to the base station 10.

Hereinafter, Operation 1) "Transition from State 3 or State 5 [main circuit ON/WUR OFF] to State 2 [main circuit OFF/WUR ON] may be performed via State 4 or State 6 [main circuit ON/WUR ON]" will be described.

Case 1-1) A case where the base station 10 indicates the terminal 20 to transition to State 2 [main circuit OFF/WUR ON].

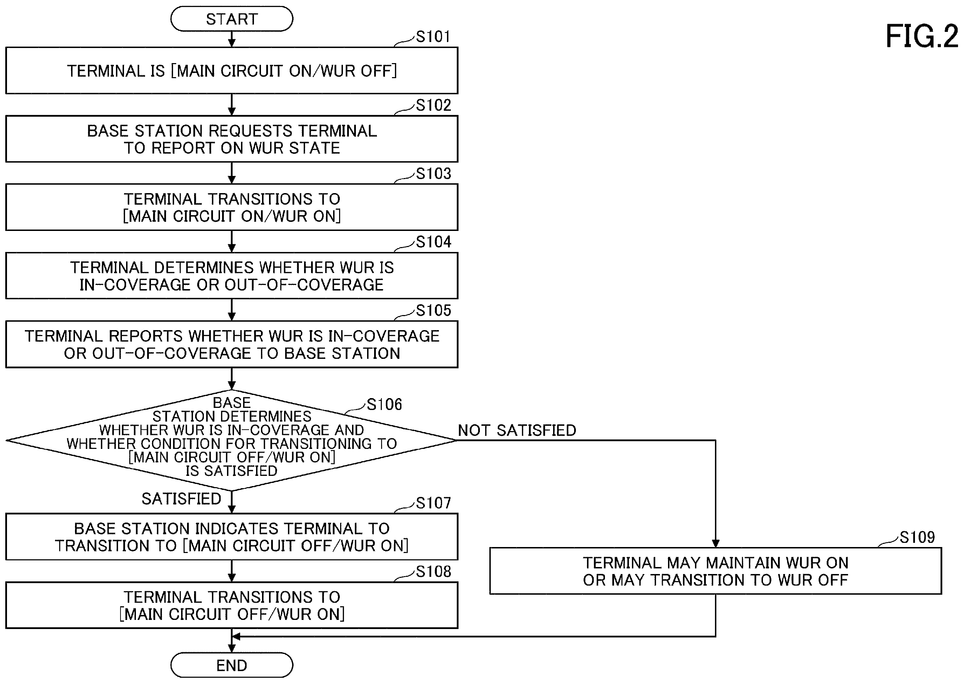

Fig. 2 is a flowchart for describing an example (1) of a control related to the wake-up receiver in an embodiment of the present invention. In step S101, the terminal 20 is in a state of [main circuit ON/WUR OFF]. In subsequent step S102, the base station 10 transmits an indication of requesting a report of the WUR state to the terminal 20. In subsequent step S103, the terminal 20 transitions to [main circuit ON/WUR ON].

In subsequent step S104, the terminal 20 determines whether the WUR is in-coverage or out-of-coverage. For example, the terminal 20 may determine whether the WUR is in-coverage or out-of-coverage based on a result of measurement or a report by the main circuit. In addition, for example, the terminal 20 may determine whether the WUR is in-coverage or out-of-coverage by taking into account the change of location information, or the like, from a state of the previous report.

In subsequent step S105, the terminal 20 reports, to the base station 10, whether the WUR is in-coverage or out-of-coverage. For example, in a case where the terminal 20 has not moved from a state of the previous report, the terminal 20 may report the previous state to the base station 10. In addition, for example, the terminal 20 may determine whether the WUR is in-coverage or out-of-coverage by performing measurement of obtaining the reception quality of a beacon, or the like, by using the WUR that is in an ON state.

In subsequent step S106, the base station 10 determines whether the WUR is in-coverage and whether a condition for transitioning to [main circuit OFF/WUR ON] is satisfied. The procedure proceeds to step S107 in a case where the condition is satisfied, and the procedure proceeds to step S109 in a case where the condition is not satisfied. The detailed condition for transitioning to [main circuit OFF/WUR ON] will be described in Operation 3).

In step S107, the base station 10 indicates the terminal 20 to transition to [main circuit OFF/WUR ON]. In subsequent step S108, the terminal 20 transitions to [main circuit OFF/WUR ON].

In step S109, the terminal 20 may keep the WUR ON or may change the WUR to OFF. Furthermore, in a case where the terminal 20 keeps the WUR ON, the terminal 20 may report that the terminal 20 keeps the WUR ON to the base station 10.

Case 1-2) A case where the base station 10 indicates the terminal 20 to transition to State 4 or State 6 [main circuit ON/WUR ON].

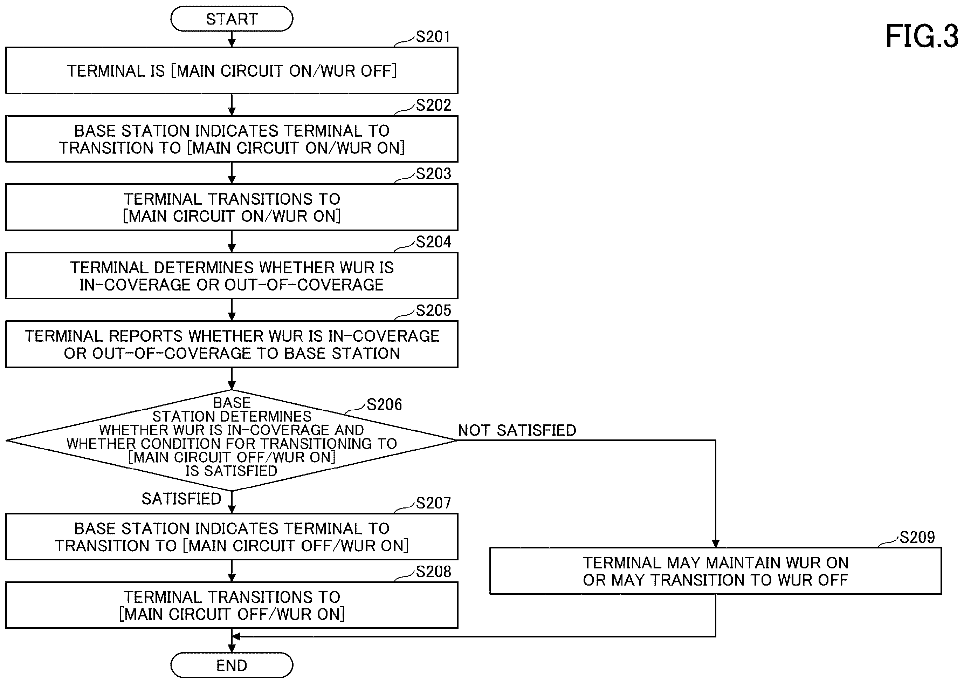

Fig. 3 is a flowchart for describing an example (2) of a control related to the wake-up receiver in an embodiment of the present invention. In step S201, the terminal 20 is in a state of [main circuit ON/WUR OFF]. In subsequent step S202, the base station 10 indicates the terminal 20 to transition to [main circuit ON/WUR ON]. In subsequent step S203, the terminal 20 transitions to [main circuit ON/WUR ON].

In subsequent step S204, the terminal 20 determines whether the WUR is in-coverage or out-of-coverage. For example, the terminal 20 may determine whether the WUR is in-coverage or out-of-coverage based on a result of measurement or a report by the main circuit. In addition, for example, the terminal 20 may determine whether the WUR is in-coverage or out-of-coverage by taking into account the change of location information, or the like, from a state of the previous report.

In subsequent step S205, the terminal 20 reports, to the base station 10, whether the WUR is in-coverage or out-of-coverage. For example, in a case where the terminal 20 has not moved from a state of the previous report, the terminal 20 may report the previous state to the base station 10. In addition, for example, the terminal 20 may determine whether the WUR is in-coverage or out-of-coverage by performing measurement of obtaining the reception quality of a beacon, or the like, by using the WUR that is in an ON state.

In subsequent step S206, the base station 10 determines whether the WUR is in-coverage and whether a condition for transitioning to [main circuit OFF/WUR ON] is satisfied. The procedure proceeds to step S207 in a case where the condition is satisfied, and the procedure proceeds to step S209 in a case where the condition is not satisfied. The detailed condition for transitioning to [main circuit OFF/WUR ON] will be described in Operation 3).

In step S207, the base station 10 indicates the terminal 20 to transition to [main circuit OFF/WUR ON]. In subsequent step S208, the terminal 20 transitions to [main circuit OFF/WUR ON].

In step S209, the terminal 20 may keep the WUR ON or may change the WUR to OFF. Furthermore, in a case where the terminal 20 keeps the WUR ON, the terminal 20 may report that the terminal 20 keeps the WUR ON to the base station 10.

Case 2) A case where the terminal 20 determines to transition to State 2 [main circuit OFF/WUR ON].

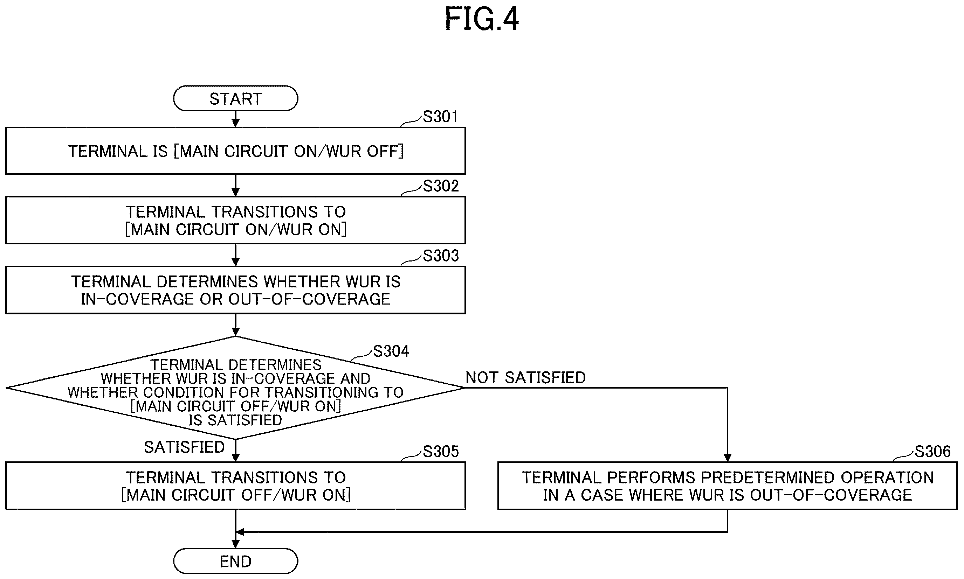

Fig. 4 is a flowchart for describing an example (3) of a control related to the wake-up receiver in an embodiment of the present invention. In step S301, the terminal 20 is in a state of [main circuit ON/WUR OFF]. In subsequent step S302, the terminal 20 transitions to [main circuit ON/WUR OFF].

In subsequent step S303, the terminal 20 determines whether the WUR is in-coverage or out-of-coverage. For example, the terminal 20 may determine whether the WUR is in-coverage or out-of-coverage based on a result of measurement or a report by the main circuit. In addition, for example, the terminal 20 may determine whether the WUR is in-coverage or out-of-coverage by taking into account the change of location information, or the like, from a state of the previous report. For example, in a case where the terminal 20 has not moved from a state of the previous report, the terminal 20 may determine whether the WUR is in-coverage or out-of-coverage based on the previous state. In addition, for example, the terminal 20 may determine whether the WUR is in-coverage or out-of-coverage by performing measurement of obtaining the reception quality of a beacon, or the like, by using the WUR that is in an ON state.

In subsequent step S304, terminal 20 determines whether the WUR is in-coverage and whether a condition for transitioning to [main circuit OFF/WUR ON] is satisfied. The procedure proceeds to step S305 in a case where the condition is satisfied, and the procedure proceeds to step S306 in a case where the condition is not satisfied. The detailed condition for transitioning to [main circuit OFF/WUR ON] will be described in Operation 3).

In step S305, the terminal 20 transitions to [main circuit OFF/WUR ON].

In step S306, the terminal 20 may perform a predetermined operation in a case where the WUR is out-of-coverage. For example, the predetermined operation may be one of the following 1) to 6) or may be a combination of a plurality of 1) to 6).

1) The terminal 20 may report that the terminal 20 cannot transition to [main circuit OFF/WUR ON] to the base station 10.
2) The terminal 20 may expect that a condition for transitioning to [main circuit OFF/WUR ON] will be configured again by the base station 10.
3) The terminal 20 may expect that the base station 10 will indicate the terminal 20 to transition to [main circuit OFF/WUR ON].
4) The terminal 20 may expect that the measurement for determining whether the WUR is in-coverage or out-of-coverage will be configured by the base station 10.
5) The terminal 20 may reset the condition for transitioning to [main circuit OFF/WUR ON]. For example, a timer related to the condition may be reset and restarted.
6) The terminal 20 may maintain [main circuit ON/WUR ON] and may periodically determine whether the WUR is in-coverage or out-of-coverage. Furthermore, in a case where the WUR is in-coverage and where a condition for transitioning to [main circuit OFF/WUR ON], the terminal 20 may transition to [main circuit OFF/WUR ON] or may report that the terminal 20 has transitioned to [main circuit OFF/WUR ON] to the base station 10.

According to the above-described Operation 1), the terminal 20 can transition from [main circuit ON/WUR OFF] to [main circuit OFF/WUR ON]. The base station 10 can cause the terminal 20 to transition from [main circuit ON/WUR OFF] to [main circuit OFF/WUR ON].

Hereinafter, Operation 2) "Operation in State 4 or State 6 [main circuit ON/WUR ON] may be specified" will be described.

In a case where the terminal 20 is in a state of [main circuit ON/WUR ON], the terminal 20 may perform one of the following 1) to 4) or a combination of a plurality of 1) to 4).

1) Determine whether the WUR is in-coverage or out-of-coverage.
2) Perform monitoring of signal quality.
3) Report measurement results to the base station 10.
4) Perform a part of an operation of the main circuit in State 3 or State 5 [main circuit ON/WUR OFF] by using the WUR. For example, monitoring of the paging channel and/or the acquisition of system information may be performed by using the WUR. An indication for the WUR such as P-RNTI (Paging Radio Network Temporary Identifier) over WUR may be specified. For example, the neighboring cell measurement may be performed by using the WUR. For example, in a case where there is a coverage overlap between the cell of the main circuit and the cell of the WUR, the neighboring cell measurement may be performed by using the WUR.

It is to be noted that an operation in State 3 (RRC_IDLE) may be, for example, the following operations.
- The UE-specific DRX configured by the higher layer
- The mobility control based on the network configuration
- Monitoring of short messages transmitted by P-RNTI over DCI
- Monitoring of a paging channel for CN (Core Network) paging using 5G-S-TMSI (5G System Temporary Mobile Subscription Identifier)
- Neighboring cell measurement and cell selection or cell reselection
- Acquisition of system information and transmission of a system information request (SI request) (if configured)
- Performing logging of available measurements together with location and time for logged measurement configured UEs

It is to be noted that an operation in State 5 (RRC_CONNECTED) may be, for example, the following operations.
- Storing AS (Access Stratum) context
- UE-specific DRX configured at lower layers
- Use of one or more SCells aggregated with SpCell by CA-supporting UEs in order to increase the bandwidth
- Use of SCG aggregated with MCG by DC-supporting UEs in order to increase the bandwidth
- Network controlled mobility within NR, to E-UTRA, or from E-UTRA
- Monitoring of short messages transmitted by P-RNTI over DCI
- Monitoring of control channels associated with the shared channel in order to determine whether or not data is scheduled
- Provision of channel quality and feedback information
- Report of neighboring cell measurement and measurement results
- Acquisition of system information
- Execution of immediate MDT (immediate Minimization of Drive Tests) and available location reporting

According to the above-described Operation 2), the terminal 20 can determine an operation related to the WUR in a case of [main circuit ON/WUR ON].

Hereinafter, Operation 3) "Condition for transitioning from State 4 or State 6 [main circuit ON/WUR ON] to State 2 [main circuit OFF/WUR ON] may be specified" will be described.

The condition for transitioning from State 4 [main circuit ON (idle)/WUR ON] to State 2 [main circuit OFF/WUR ON] may be a case in which one of the following Condition 1) to Condition 6) is satisfied or in which a plurality of the conditions are satisfied.

Condition 1) A case in which a timer expires or has expired in State 4 [main circuit ON (idle)/WUR ON], the start of the timer being triggered by the last paging reception.
Condition 2) A case in which a timer expires or has expired in State 4 [main circuit ON (idle)/WUR ON], the start of the timer being triggered when a value of measured RSRP (Reference signal received power) becomes equal to or greater than a threshold value.
Condition 3) A case in which a transition indication is received via paging or PEI (Paging early indication) in State 4 [main circuit ON (idle)/WUR ON].
Condition 4) A case in which a timer expires or has expired in State 4 [main circuit ON (idle)/WUR ON], the start of the timer being triggered by transition to State 4.
Condition 5) A case in which the WUR is determined to be in-coverage in State 4 [main circuit ON (idle)/WUR ON]. For example, a case in which the beacon reception accuracy (RSRP, or the like) is equal to or greater than a threshold value.
Condition 6) A case in which the mobility is determined to be low in State 4 [main circuit ON (idle)/WUR ON].

It is to be noted that the condition for transitioning from State 3 [main circuit ON (idle)/WUR OFF] to State 2 [main circuit OFF/WUR ON] may be a case in which one of the following Condition 1) to Condition 4) is satisfied or in which a plurality of the conditions are satisfied.

Condition 1) A case in which a timer expires or has expired in State 3 [main circuit ON (idle)/WUR OFF], the start of the timer being triggered by the last paging reception.
Condition 2) A case in which a timer expires or has expired in State 3 [main circuit ON (idle)/WUR OFF], the start of the timer being triggered when a value of measured RSRP (Reference signal received power) becomes equal to or greater than a threshold value.
Condition 3) A case in which a transition indication is received via paging or PEI (Paging early indication) in State 3 [main circuit ON (idle)/WUR OFF].
Condition 4) A case in which a timer expires or has expired in State 3 [main circuit ON (idle)/WUR OFF], the start of the timer being triggered by transition to State 3.

The condition for transitioning from State 6 [main circuit ON (connected)/WUR ON] to State 2 [main circuit OFF/WUR ON] may be a case in which one of the following Condition 1) to Condition 6) is satisfied or in which a plurality of the conditions are satisfied.

Condition 1) A case in which a timer expires or has expired in State 6 [main circuit ON (connected)/WUR ON], the start of the timer being triggered by transition to State 6.
Condition 2) A case in which an indication (for example, an indication via MAC-CE or DCI) is received from the base station 10 in State 6 [main circuit ON (connected)/WUR ON]
Condition 3) A case in which the reception operation using DRX is finished in State 6 [main circuit ON (connected)/WUR ON]. That is, a case in which the drx-inactivity timer expires or has expired.
Condition 4) A case in which there is a transition to DRX in State 6 [main circuit ON (connected)/WUR ON]. Alternatively, a case of starting DRX.
Condition 5) A case in which the WUR is determined to be in-coverage in State 6 [main circuit ON (connected)/WUR ON]. For example, a case in which the beacon reception accuracy (RSRP, or the like) is equal to or greater than a threshold value. Condition 6) A case in which the mobility is determined to be low in State 6 [main circuit ON (connected)/WUR ON].

It is to be noted that the condition for transitioning from State 5 [main circuit ON (connected)/WUR OFF] to State 2 [main circuit OFF/WUR ON] may be a case in which one of the following Condition 1) to Condition 4) is satisfied or in which a plurality of the conditions are satisfied.

Condition 1) A case in which a timer expires or has expired in State 5 [main circuit ON (connected)/WUR OFF], the start of the timer being triggered by transition to State 5.
Condition 2) A case in which an indication (for example, an indication via MAC-CE or DCI) is received from the base station 10 in State 5 [main circuit ON (connected)/WUR OFF]
Condition 3) A case in which the reception operation using DRX is finished in State 5 [main circuit ON (connected)/WUR OFF]. That is, a case in which the drx-inactivity timer expires.
Condition 4) A case in which there is a transition to DRX in State 5 [main circuit ON (connected)/WUR OFF]. Alternatively, a case of starting DRX.

According to the above-described Operation 3), the terminal 20 can transition from State 4 or State 6 [main circuit ON/WUR ON] to State 2 [main circuit OFF/WUR ON] in accordance with the communication situation.

Hereinafter, Operation 4) "Condition for transitioning from State 2 [main circuit OFF/WUR ON] to State 4 or State 6 [main circuit ON/WUR ON] may be specified" will be described.

The condition for transitioning from State 2 [main circuit OFF/WUR ON] to State 4 [main circuit ON (idle)/WUR ON] may be a case in which one of the following Condition 1) to Condition 4) is satisfied or in which a plurality of the conditions are satisfied.

Condition 1) A case in which the WUR receives a WUS (Wake-up signal) in State 2 [main circuit OFF/WUR ON].
Condition 2) A case in which the WUR does not receive a WUS during a predetermined period in State 2 [main circuit OFF/WUR ON].
Condition 3) A case in which transmission data is generated in State 2 [main circuit OFF/WUR ON].
Condition 4) A case in which the WUR cannot receive a beacon signal during a predetermined period or the beacon signal reception quality is equal to or less than a threshold value in State 2 [main circuit OFF/WUR ON].

The condition for transitioning from State 2 [main circuit OFF/WUR ON] to State 6 [main circuit ON (connected)/WUR ON] may be a case in which one of the following Condition 1) to Condition 5) is satisfied or in which a plurality of the conditions are satisfied.

Condition 1) A case in which transmission data is generated in State 2 [main circuit OFF/WUR ON].
Condition 2) A case in which the WUR receives a WUS in State 2 [main circuit OFF/WUR ON].
Condition 3) A case in which the WUR does not receive a WUS during a predetermined period in State 2 [main circuit OFF/WUR ON] and in which the state transitions to idle because of the timer expiration.
Condition 4) A case in which the WUR cannot receive a beacon signal during a predetermined period or the beacon signal reception quality is equal to or less than a threshold value in State 2 [main circuit OFF/WUR ON].
Condition 5) A case in which the TA (Timing Advance) synchronization is maintained in State 2 [main circuit OFF/WUR ON].

It is to be noted that the condition for transitioning from State 2 [main circuit OFF/WUR ON] to State 3 [main circuit ON (idle)/WUR OFF] may be the same as the condition for transitioning from State 2 [main circuit OFF/WUR ON] to State 4 [main circuit ON (idle)/WUR ON]. Whether the transition is a transition from State 2 to State 3 or a transition from State 2 to State 4 may be specified in the technical specifications or may be configured by the base station 10.

It is to be noted that the condition for transitioning from State 2 [main circuit OFF/WUR ON] to State 5 [main circuit ON (connected)/WUR OFF] may be the same as the condition for transitioning from State 2 [main circuit OFF/WUR ON] to State 6 [main circuit ON (connected)/WUR ON]. Whether the transition is a transition from State 2 to State 5 or a transition from State 2 to State 6 may be specified in the technical specifications or may be configured by the base station 10.

It is to be noted that whether the transition is a transition from State 2 to State 3 or State 5 or a transition from State 2 to State 4 or State 6 may be configured for each transitioning condition. For example, the transition may be a transition from State 2 to State 3 or State 5 in a case where the beacon signal cannot be received, and the transition may be a transition from State 2 to State 4 or State 6 in a case where a WUS is received.

According to the above-described Operation 4), the terminal 20 can transition from State 2 [main circuit OFF/WUR ON] to State 4 or State 6 [main circuit ON/WUR ON] in accordance with the communication situation.

Hereinafter, Operation 5) "The terminal 20 may report the UE capability related to State 4 or State 6 [main circuit ON/WUR ON] to the base station 10" will be described.

The terminal 20 may include the WUR and report the UE capability indicating whether or not an operation related to State 4 or State 6 [main circuit ON/WUR ON] can be supported to the base station 10.

For example, the terminal 20 may report the UE capability indicating whether or not State 4 or State 6, that is, the simultaneous operation of the main circuit and the WUR, is supported to the base station 10.

For example, the terminal 20 may report the UE capability indicating whether or not a part of the predetermined operation of the main circuit can be performed by the WUR in State 4 or State 6 to the base station 10.

In addition, the terminal 20 may report the above-described UE capability as the UE capability of the terminal 20. In addition, the terminal 20 may collectively report the above-described UE capability with respect to all frequencies. In addition, the terminal 20 may report the above-described UE capability for each frequency. In addition, the terminal 20 may report the above-described UE capability for each FR (Frequency range). In addition, the terminal 20 may report the above-described UE capability for each duplex method.

According to an embodiment of the present invention, the terminal 20 can appropriately control the main receiver and the wake-up receiver to reduce the power consumption by performing the state transition in accordance with the communication situation.

In other words, a simple receiver and a main receiver installed in a terminal in a wireless communication system can be controlled.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

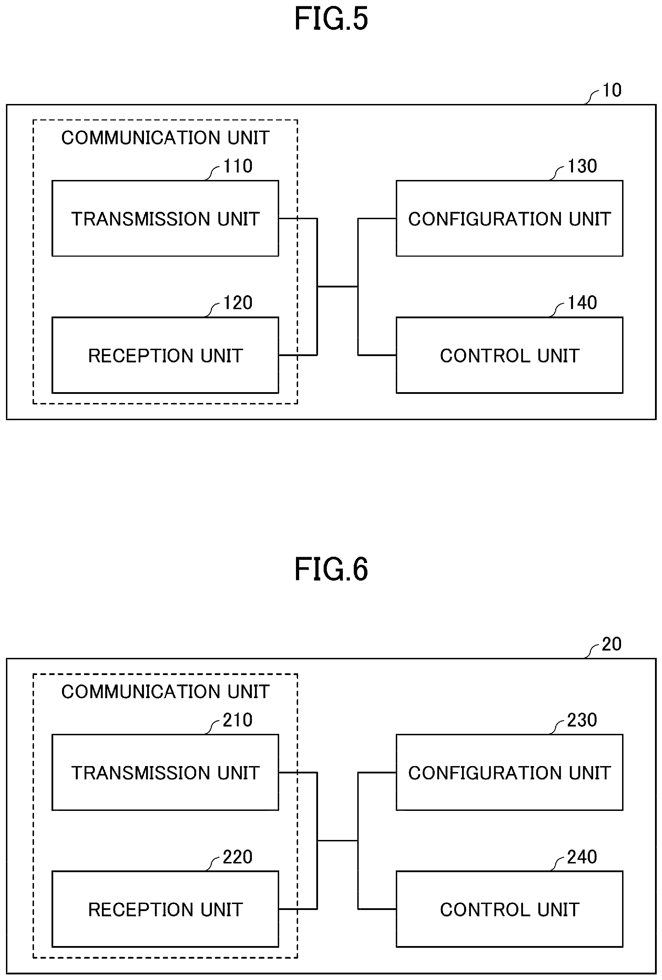

Fig. 5 is a drawing illustrating an example of a functional structure of a base station 10 according to an embodiment of the present invention. As shown in Fig. 5, the base station 10 includes a transmission unit 110, a reception unit 120, a configuration unit 130, and a control unit 140. The functional configuration illustrated in Fig. 5 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the WUR configuration.

The control unit 140 performs control related to the WUR configuration as described in the embodiments. In addition, the control unit 140 performs scheduling. The functional units related to signal transmission in the control unit 140 may be included in the transmission unit 110, and the functional units related to signal reception in the control unit 140 may be included in the reception unit 120.

### <Terminal 20>

Fig. 6 is a drawing illustrating an example of a functional structure of a terminal 20 according to an embodiment of the present invention. As shown in Fig. 6, the terminal 20 includes a transmission unit 210, a reception unit 220, a configuration unit 230, and a control unit 240. The functional configuration illustrated in Fig. 6 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH. It is to be noted that the terminal 20 may have both a reception unit of the wake-up receiver and a reception unit of the main receiver.

The configuration unit 230 stores various configuration information items received by the reception unit 220 from the base station 10. In addition, the configuration unit 230 also stores pre-configured configuration information. Contents of the configuration information are, for example, information related to the WUR configuration.

The control unit 240 performs control related to the WUR configuration as described in the embodiments. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 5 and Fig. 6) show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

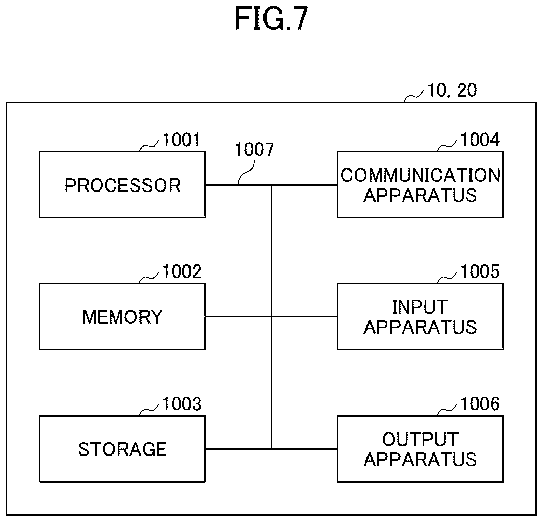

For example, the base station 10, the terminal 20, etc., according to an embodiment of the present disclosure may function as a computer for processing the radio communication method of the present disclosure. Fig. 7 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 5 may be implemented by control programs that are stored in the memory 1002 and that operate on the processor 1001. In addition, for example, the control unit 240 of the terminal 20 illustrated in Fig. 6 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output device 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

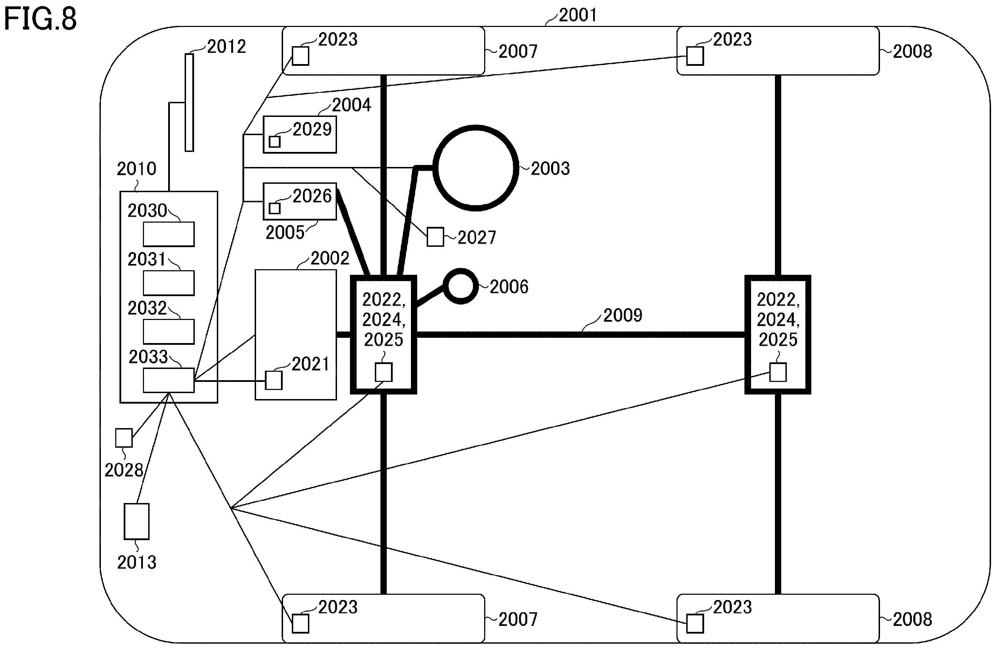

Fig. 8 shows an example of a configuration of a vehicle 2001. As shown in Fig. 8, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a first reception unit configured to receive a first signal from a base station; a second reception unit configured to receive a second signal from the base station by using a power consumption smaller than that of the first reception unit; and a control unit configured to activate or deactivate each of the first reception unit and the second reception unit. In a case where the first reception unit is activated and the second reception unit is deactivated, the control unit deactivates the first reception unit after activating the second reception unit.

According to the above-described configuration, the terminal 20 can appropriately control the main receiver and the wake-up receiver to reduce the power consumption by performing the state transition in accordance with the communication situation. In other words, a simple receiver and a main receiver installed in a terminal in a wireless communication system can be controlled.

The first reception unit may receive, from the base station, an indication of requesting a report indicating whether the second reception unit is in-coverage or out-of-coverage, and the control unit may determine whether the second reception unit is in-coverage or out-of-coverage, the terminal further including a transmission unit configured to transmit a result of the determination to the base station. The first reception unit may receive, from the base station, an indication of deactivating the first reception unit and activating the second reception unit, and the control unit may deactivate the first reception unit and activate the second reception unit. According to the above-described configuration, the terminal 20 can appropriately control the main receiver and the wake-up receiver to reduce the power consumption by performing the state transition in accordance with the communication situation.

The control unit may determine whether the second reception unit is in-coverage or out-of-coverage, and may deactivate the first reception unit and activate the second reception unit in a case where the second reception unit is in-coverage and where a transition condition is satisfied. According to the above-described configuration, the terminal 20 can appropriately control the main receiver and the wake-up receiver to reduce the power consumption by performing the state transition in accordance with the communication situation.

The transition condition may be a condition that a timer expires or has expired in a case where the first reception unit is in an idle state, the timer being triggered to start at a time of transition to the idle state. According to the above-described configuration, the terminal 20 can appropriately control the main receiver and the wake-up receiver to reduce the power consumption by performing the state transition in accordance with the communication situation.

The transition condition may be a condition that a drx-inactivity timer expires or has expired in a case where the first reception unit is in a connected state. According to the above-described configuration, the terminal 20 can appropriately control the main receiver and the wake-up receiver to reduce the power consumption by performing the state transition in accordance with the communication situation.

In addition, according to an embodiment of the present invention, a communication method performed by a terminal is provided. The communication method includes: a first reception procedure of receiving a first signal from a base station; a second reception procedure of receiving a second signal from the base station by using a power consumption smaller than that of the first reception procedure; a control procedure of activating or deactivating each of the first reception procedure and the second reception unit; and a procedure of deactivating the first reception procedure after activating the second reception procedure in a case where the first reception procedure is activated and the second reception procedure is deactivated.

According to the above-described configuration, the terminal 20 can appropriately control the main receiver and the wake-up receiver to reduce the power consumption by performing the state transition in accordance with the communication situation. In other words, a simple receiver and a main receiver installed in a terminal in a wireless communication system can be controlled.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. A plurality of systems may be combined (for example, a combination of LTE or LTE-A and 5G, and the like) for application.

The order of processes, sequences, flowcharts, and so on that have been used to describe the aspects/embodiments in the present specification may be reordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is an object that can move, and the moving speed can be any speed. In addition, a moving object that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of the base station and the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). For a UE, one or more BWPs may be configured in one carrier.

At least one of the configured BWPs may be activated, and the UE may assume that the UE will not transmit and receive signals/channels outside the activated BWP. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus

## Claims

1. A terminal comprising:
a first reception unit configured to receive a first signal from a base station;
a second reception unit configured to receive a second signal from the base station by using a power consumption smaller than that of the first reception unit; and
a control unit configured to activate or deactivate each of the first reception unit and the second reception unit, wherein
in a case where the first reception unit is activated and the second reception unit is deactivated, the control unit deactivates the first reception unit after activating the second reception unit.

2. The terminal as claimed in claim 1, wherein
the first reception unit receives, from the base station, an indication of requesting a report indicating whether the second reception unit is in-coverage or out-of-coverage, and
the control unit determines whether the second reception unit is in-coverage or out-of-coverage,
the terminal further comprises a transmission unit configured to transmit a result of the determination to the base station, wherein
the first reception unit receives, from the base station, an indication of deactivating the first reception unit and activating the second reception unit, and
the control unit deactivates the first reception unit and activates the second reception unit.

3. The terminal as claimed in claim 1, wherein
the control unit determines whether the second reception unit is in-coverage or out-of-coverage, and deactivates the first reception unit and activates the second reception unit in a case where the second reception unit is in-coverage and where a transition condition is satisfied.

4. The terminal as claimed in claim 3, wherein
the transition condition is a condition that a timer expires or has expired in a case where the first reception unit is in an idle state, the timer being triggered to start at a time of transition to the idle state.

5. The terminal as claimed in claim 3, wherein
the transition condition is a condition that a drx-inactivity timer expires or has expired in a case where the first reception unit is in a connected state.

6. A communication method performed by a terminal, the communication method comprising:
a first reception procedure of receiving a first signal from a base station;
a second reception procedure of receiving a second signal from the base station by using a power consumption smaller than that of the first reception procedure;
a control procedure of activating or deactivating each of the first reception procedure and the second reception unit; and
a procedure of deactivating the first reception procedure after activating the second reception procedure in a case where the first reception procedure is activated and the second reception procedure is deactivated.
